# EUROPEAN PATENT APPLICATION

(11) **EP 1 928 122 A1**
(43) Date of publication of application: **04.06.2008**
(21) Application number: 07118942.7
(22) Date of filing: 22.10.2007
(51) Int. Cl.: H04L 12/10, H04L 12/28

(54) **Display apparatus with independently power supplied network part**

(30) Priority: 15.11.2006 KR 20060112823
(71) Applicant: Samsung Electronics Co., Ltd., Suwon-si, Gyeonggi-Do (KR)
(72) Inventor: Kim, Kyoung-wook, Gyeonggi-do (KR)
(74) Representative: D'Halleweyn, Nele Veerle Trees Gertrudis

(57) **Abstract**

A display apparatus includes: a system part including a network access module for communication with an Internet; a line share controller that is assigned a public IP address for access to the Internet and controls share of the public IP address so that the network access module and at least one local device can access the Internet through the public IP address; a power supplying part that receives power from an external source and supplies driving power to the system part and the line share controller; and a power controller that controls the power supplying part to supply the driving power to the line share controller at all times irrespective of a power condition of the system part.

## Description

### BACKGROUND OF INVENTION

### Field of Invention

An apparatus consistent with the present invention relates to a display apparatus, and more particularly, to a display apparatus having an Internet accessible communication module.

### Description of the Related Art

In recent years, with active studies on home networks, home networks and home network-based technologies have been rapidly developed. A home network allows home appliances to exchange information between one another via an interconnected network or to directly receive information away from home via the Internet.

With a recent spread of Server-Based Computing (SBC) systems, many thin client models have been expected to appear. In addition to the SBC systems, many home appliances need an interconnection by a network due to rapid change in digital environments.

Particularly for home display apparatuses, multifunction monitors capable of receiving a variety of services via the Internet, not just for viewing television (TV) programs, have spread. It is common that such multifunction monitors are integrated with computer modules and have network modules for access to the Internet.

However, it is common at home that the Internet is accessed using one communication line. Therefore, under such circumstances, in order to access another home appliance through the Internet, an additional line has to be installed or access of a home appliance connected to the Internet has to be released.

Similarly, one line is assigned for each employee in most companies. Under such circumstances, the same problem arises if another device is to be accessed through the Internet.

### SUMMARY OF THE INVENTION

Accordingly, it is an aspect of the present invention to provide a display apparatus which enables access to a plurality of devices through the Internet using one line.

Additional aspects of the present invention will be set forth in part in the description which follows and, in part, will be obvious from the description, or may be learned by practice of the present invention.

According to an aspect of the present invention, there is provided a display apparatus comprising: a system part that has a signal processing module which processes a multimedia signal and a network access module for communication with the outside; a line share controller that is assigned with a predetermined public Internet Protocol (IP) address for access to the Internet and controls share of the public IP address so that the network access module and at least one local device can access the Internet through the public IP address; a power supplying part that receives power from the outside and supplies driving power to the system part and the line share controller; and a power controller that controls the power supplying part according to a power OFF instruction and a power save mode instruction input from a user so that the system part can operate in a power OFF condition and a power save mode, and controls the power supplying part to supply power to the line share controller at all times irrespective of a power condition of the system part.

The line share controller may comprise a first connecting part for access to the Internet and a second connecting part to which the at least one local device is connected.

The line share controller may enter a sleep mode if there is no data input from the first and second connecting parts for a predetermined period of time, under the power off condition of the system part.

The line share controller may comprise a Dynamic Host Configuration Protocol (DHCP) module that assigns private IP addresses to the network access part and the local device, and a Network Address Translation (NAT) part that performs a conversion function between the private IP address and the public IP address so that the local device and the network access module can access the Internet.

The display apparatus may further comprise a Voice over Internet Protocol (VoIP) communication module.

According to another aspect of the present invention, there is provided a display apparatus integrated with a computer, comprising: a system part that has a plurality of electronic components including a processor which performs an arithmetic operation, an image processing module and a network access module which processes communication with the outside; a line share controller that comprises a first connecting part for communication with an external network and a second connecting part for communication with at least one local device, is assigned with a predetermined public IP address, and controls the at least one local device and the network access module to share the public IP address; a power supplying part that receives power from the outside and supplies driving power to the system part and the line share controller; and a power controller that controls the power supplying part to supply power to the line share controller at all times irrespective of a power condition of the system part when power is supplied from the outside.

The line share controller may enter a sleep mode if there is no data input from the first and second connecting parts for a predetermined period of time, under a power off condition of the system part.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a control block diagram of a display apparatus according to an exemplary embodiment of the invention; and
FIG. 2 is a detailed block diagram of a line share controller according to the exemplary embodiment of the invention.

### DETAILED DESCRIPTION OF EXEMPLARY EMBODIMENTS OF THE INVENTION

Reference will now be made in detail to the exemplary embodiments of the present invention, examples of which are illustrated in the accompanying drawings, wherein like reference numerals refer to like elements throughout. The exemplary embodiments are described below so as to explain the present invention by referring to the figures.

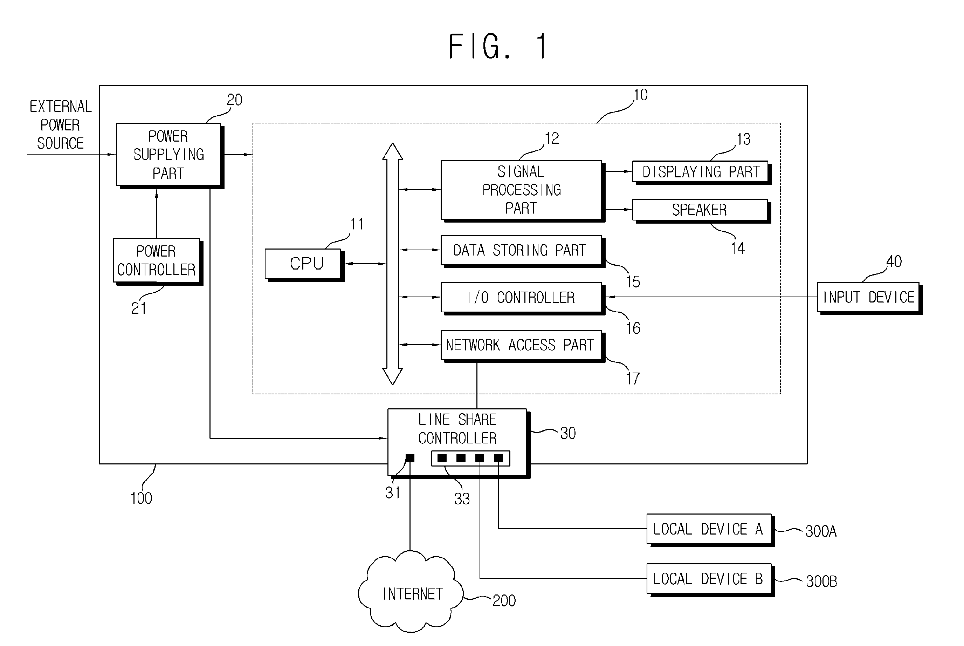

FIG. 1 is a control block diagram of a display apparatus 100 according to an exemplary embodiment of the invention. As shown in FIG. 1, the display apparatus 100 according to the exemplary embodiment of the invention comprises a system part 10 having a plurality of components, a power supplying part 20 that receives power from the an external source (for example, commercial power supply) and supplies power to other internal elements of the display apparatus 100, a power controller 21 that controls the power supply of the power supplying part 20, and a line share controller 30.

The system part 10 comprises a central processing unit (CPU) 11, a signal processing part 12, a displaying part 13, a speaker 14, a data storing part 15, an input/output (I/O) controller 16, and a network access part 17.

The CPU 11 performs arithmetic and control operations and may be embodied by a micro processor unit (MPU) or a micro controller unit (MCU).

The signal processing part 12 processes a multimedia signal including an image signal and an audio signal and outputs the processed image signal and audio signal to the displaying part 13 and the speaker 14, respectively.

The displaying part 13 displays the processed image signal as an image on a screen and comprises a display panel (not shown) on which the image is displayed and a panel driving part (not shown) that controls driving of the display panel. In this exemplary embodiment, the displaying part 13 may be provided as one of various types of display modules such as a digital light processing (DLP) device, a liquid crystal display (LCD), a plasma display panel (PDP) and so on.

The data storing part 15 may store an operating system (OS), various application programs, and data including moving picture files, music files and so on, and may be embodied by a hard disk drive (HDD).

The I/O controller 16 controls input/output and interfaces an instruction input from a user through an input device 40. The input device 40 for a user input may be embodied by a remote controller, a mouse, a keyboard, and/or a plurality of buttons provided at one side of a casing of the display apparatus 100.

The network access part 17 is a communication module which accesses an external network and controls input/output of data packets. In this exemplary embodiment, the network access part 17 may be embodied by an Ethernet card.

The system part 10 may include other electronic components in addition to the above-mentioned components. However, other electronic components may not directly relate to the invention, and therefore, explanation thereof will be omitted.

The power supplying part 20 receives power from the external source, converts the received power to driving power compatible for components of the system part 10 and the line share controller 30, and supplies the driving power to the components of the system part 10 and the line share controller 30.

The power controller 21 controls the power supplying part 20 according to a power ON/OFF instruction and a power save mode instruction from a user so that the system part 10 can operate in a corresponding power condition, and controls the power supplying part 20 to supply power to the line share controller 30 at all times irrespective of the power condition of the system part 10. That is, when the user pushes a power ON/OFF switch, the power controller 21 receives the power ON/OFF instruction and applies a corresponding control signal to the power supplying part 20. In this exemplary embodiment, the power controller 21 may be embodied by any one function included in a MCU or a MPU.

As long as power is supplied to the display apparatus 100 from the external source, for example as long as a power plug of the display apparatus 100 is connected to an external power supply, the power controller 21 controls the power supplying part 20 to supply power to the line share controller 30, even if the system part 10 is turned off and does not perform a display function. Thus, the line share controller 30 can be constantly supplied with power if the power plug is connected to the external power supply.

The line share controller 30 is assigned with a public IP address from an Internet Service Provider (ISP), and assigns private IP addresses to at least one local device connected to the line share controller 30 as well as the display apparatus 100. These private IP addresses can not be used in an external network, that is, the Internet 200, but used only in an internal network. Accordingly, if communication packets are outbound to the external network, that is, the Internet 200, the line share controller 30 changes a destination address of the communication packets into a public IP address. If communication packets are inbound to the display apparatus 100 and the local devices, the line share controller 30 changes a destination address of the communication packets into private IP addresses of the display apparatus 100 and the local devices. Here, the public IP address may be either a static IP address or a dynamic IP address.

As shown in FIG. 1, the Internet 200 is accessible through a first connecting part 31 of the line share controller 30 and local devices 300A and 300B are accessible through second connecting part 33 of the line share controller 30.

As described above, the line share controller 30 can be constantly supplied with power from the power supplying part 20 irrespective of the power condition of the system part 10. Therefore, the local devices 300A and 300B connected to the line share controller 30 can have access to the Internet 200 through the line share controller 30 even if the system part 10 is powered off.

In addition, under a power off condition of the system part 10, if there is no data input from the first and second connecting parts 31 and 33 for a predetermined period of time, the line share controller 30 may enter a sleep mode. If there is data input from these first and second connecting parts 31 and 33 during the sleep mode, the line share controller 30 is instantly awakened to enter a normal mode. Thus, unnecessary waste of power can be reduced.

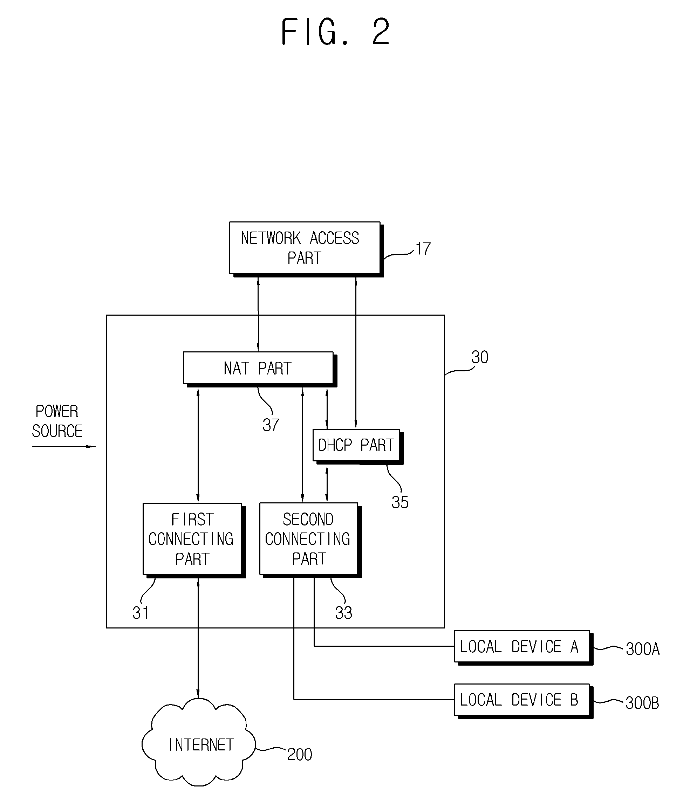

Hereinafter, detailed operation of the line share controller 30 will be described with reference to FIG. 2. FIG. 2 is a detailed block diagram of the line share controller 30.

As shown in FIG. 2, the line share controller 30 comprises the first connecting part 31, the second connecting part 33, a Dynamic Host Configuration Protocol (DHCP) part 35, and a Network Address Translation (NAT) part 37.

The first connecting part 31 accesses the Internet 200 through a communication line or in wireless way.

The second connecting part 33 accesses at least one local device, for example, two local devices 300A and 300B in this exemplary embodiment. In this exemplary embodiment, the local devices 300A and 300B may be devices, for example, a computer, a refrigerator, a TV, a VoIP phone, etc., which form an internal network with the display apparatus 100 and externally access the Internet 200 through the line share controller 30. Here, network interfaces of the devices may be Ethernet-based interfaces.

DHCP refers to a protocol that automatically sets a basic setup of an IP address and various Transmission Control Protocol (TCP)/IPs for clients, and the DHCP part 35 may be embodied by a program that executes the DHCP.

When the system including the display apparatus 100 and the local devices 300A and 300B begins to operate, the display apparatus 100 and the local devices 300A and 300B request their own private IP addresses from the line share controller 30, and the DHCP part 35 assigns the private IP addresses to the display apparatus 100 and the local devices 300A and 300B according to the request. When the display apparatus 100 and the local devices 300A and 300B are assigned with their respective private IP addresses, their respective TCP/IP setups are initialized, and communications between the display apparatus 100 and the local devices 300A and 300B are established using the TCP/IP.

Upon receiving a data packet from the second connecting part 33 or the network access part 17, the NAT part 37 parses a header of the data packet to determine a destination address of the data packet. If the destination address is for a location across the Internet 200, the NAT part 37 converts a private IP address of a corresponding device into a public IP address and transmits the data packet having the public IP address through the first connecting part 31.

Similarly, upon receiving a data packet from the first connecting part 31, the NAT part 37 parses a header of the data packet to determine a destination address of the data packet, converts the destination address into a private IP address of a corresponding device, and transmits the data packet having the private IP address to the corresponding device. At this time, physical addresses, such as Media Access Control (MAC) addresses, of devices may be used to distinguish among destination addresses of data packets with the same public IP address. Alternatively, by adding port numbers corresponding to the devices in transmission of the data packets to the Internet 200, the destination addresses can be distinguished from each other when the data packets are transmitted from the Internet 200.

The display apparatus 100 and the local devices 300A and 300B connected to the second connection port 33 form an internal network and can communicate with each other.

In this manner, when a module having an IP share function, such as the line share controller 30, is built in the display apparatus 100, a plurality of network devices can access the Internet 200 using one line by connecting to the module.

In addition, under the condition where power is supplied from an external source, the line share controller 30 is always supplied with power irrespective of the power condition of the system part 10, and accordingly, the line share controller 30 can operate even if the system part 10 is powered off.

The display apparatus 100 of the invention may further comprise a VoIP module. Accordingly, the display apparatus 100 may perform a display phone function. When the display phone function is used, the display apparatus 100 may be connected to an external telephone terminal.

In addition, the display apparatus 100 may be a display apparatus having network functions, such as a TV, a monitor, a monitor integrated with computer module, etc.

As apparent from the above description, the present invention provides a display apparatus which enables a plurality of devices to access the Internet using one line.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A display apparatus comprising:
a system part comprising a network access module which communicates with an Internet;
a line share controller which is assigned a public Internet Protocol (IP) address and controls a sharing of the public IP address between the network access module and at least one local device, such that the network access module and the at least one local device access the Internet through the public IP address;
a power supplying part which receives power from an external source and supplies driving power to the system part and the line share controller; and
a power controller which controls the power supplying part to supply the driving power to the line share controller at all times irrespective of a power condition of the system part.

2. The display apparatus according to claim 1, wherein the line share controller comprises a first connecting part which communicates with the Internet and a second connecting part to which the at least one local device is connected.

3. The display apparatus according to claim 2, wherein the line share controller enters a sleep mode if there is no data input from the first and second connecting parts for a period of time, and if the power condition of the system part is a power off condition.

4. The display apparatus according to claims 2 or 3, wherein the line share controller comprises a Dynamic Host Configuration Protocol (DHCP) module that assigns a private IP address to each of the network access module and the local device, and a Network Address Translation (NAT) part that converts the private IP address of each of the network access module and the local device into the public IP address.

5. The display apparatus according to claim 1, further comprising a Voice over Internet Protocol communication module.

6. The display apparatus according to claim 1, wherein the system part further comprises a signal processing module which processes a multimedia signal.

7. The display apparatus according to claim 1, wherein the power controller controls the power supplying part according to a power OFF instruction and a power save mode instruction input from a user so that the system part can operate in a power OFF condition and a power save mode.

8. A display apparatus integrated with a computer, the display device comprising:
a system part comprising a network access module which communicates with an Internet;
a line share controller which comprises a first connecting part which communicates with the Internet and a second connecting part which communicates with at least one local device, is assigned a public Internet Protocol (IP) address, and controls the at least one local device and the network access module to share the public IP address;
a power supplying part that receives power from an external source and supplies driving power to the system part and the line share controller; and
a power controller that controls the power supplying part to supply the driving power to the line share controller at all times irrespective of a power condition of the system part if power is supplied from the external source.

9. The display apparatus integrated with the computer according to claim 8, wherein the line share controller enters a sleep mode if there is no data input from the first and second connecting parts for a period of time, and if the power condition of the system part is a power off condition.

10. The display apparatus integrated with the computer according to claim 8, wherein the system part further comprises:
a processor which performs an arithmetic operation; and
an image processing module.
